# EUROPEAN PATENT APPLICATION

(11) **EP 3 979 128 A1**
(43) Date of publication of application: **06.04.2022**
(21) Application number: 21744588.1
(22) Date of filing: 20.01.2021
(51) Int. Cl.: G06K 9/00

(54) **MAKEUP PROCESSING METHOD AND APPARATUS, ELECTRONIC DEVICE, AND STORAGE MEDIUM**

(30) Priority: 20.01.2020 CN 202010065043
(71) Applicant: Shenzhen Sensetime Technology Co., Ltd., Shenzhen, Guangdong 518000 (CN)
(72) Inventor: LIN, Xiaoya, Shenzhen, Guangdong 518000 (CN); GUO, Zhitong, Shenzhen, Guangdong 518000 (CN); LUO, Zefeng, Shenzhen, Guangdong 518000 (CN); LU, Xiaofeng, Shenzhen, Guangdong 518000 (CN); LU, Yiru, Shenzhen, Guangdong 518000 (CN)
(74) Representative: Bandpay & Greuter
(86) International application number: PCT/CN2021/072920
(87) International publication number: WO 2021/147920

(57) **Abstract**

The present disclosure provides a makeup look processing method and apparatus, an electronic device, and a storage medium. The method includes: displaying a collected face image; selecting one makeup look from one or more makeup looks as a first makeup look; identifying a face part area matching the first makeup look from the face image, and instructing a making-up content for the face part area; and detecting, from the collected face image, pixel change information of the face part area, and determining whether the pixel change information meets a makeup effect condition for the first makeup look.

## Description

### TECHNICAL FIELD

The present disclosure relates to the field of computer technology, and in particular, to methods, apparatuses, electronic devices, and storage media for makeup look processing.

### BACKGROUND

Teaching and practice of making-up depend on actual operations performed on faces by making-up learners using cosmetics. Experience and technical skills of making-up artists are required and could be achieved by repeated teaching, understanding and practice.

### SUMMARY

In view of this, the present disclosure provides at least methods, apparatuses, electronic devices, and storage media for makeup look processing.

In a first aspect, the present disclosure provides a makeup look processing method, including:
displaying a collected face image;
selecting one makeup look from one or more makeup looks as a first makeup look;
identifying a face part area matching the first makeup look from the face image, and instructing a making-up content for the face part area;
detecting, from the collected face image, pixel change information of the face part area, and determining whether the pixel change information meets a makeup effect condition for the first makeup look.

According to this method, by identifying the face part area matching the first makeup look from the face image, and instructing the making-up content for the face part area, a user can perform makeup look processing according to the instructed making-up content, and by detecting the pixel change information of the face part area, until it is determined that the pixel change information meets the makeup effect condition for the first makeup look, the user can determine makeup look processing progress based on the detected pixel change information, which enables the makeup look processing to be intuitive.

In a second aspect, the present disclosure provides a makeup look processing apparatus, including:
a displaying module configured to display a collected face image;
a selecting module configured to select one makeup look from one or more makeup looks as a first makeup look;
an identifying module configured to identify a face part area matching the first makeup look from the face image, and instruct a making-up content for the face part area; and
a detecting module configured to detect, from the collected face image, pixel change information of the face part area, and determine whether the pixel change information meets a makeup effect condition for the first makeup look.

In a third aspect, the present disclosure provides an electronic device, including: a processor, a memory and a bus, where the memory stores machine readable instructions executable by the processor; when the electronic device is running, the processor communicates with the memory via the bus; and the machine readable instructions are executed by the processor to perform the steps in the makeup look processing method according to the first aspect or any one of embodiments.

In a fourth aspect, the present disclosure provides a computer readable storage medium having a computer program stored thereon, where the computer program is executed by a processor to perform the steps in the makeup look processing method according to the first aspect or any one of embodiments.

In order to make the obj ectives, features and advantages of the present disclosure more obvious and understandable, the present disclosure will be described below in detail with reference to accompanying drawings in conjunction with preferred embodiments.

### BRIEF DESCRIPTION OF THE DRAWINGS

In order to more clearly describe the technical solutions in the embodiments of the present disclosure, the drawings that need to be used in the embodiments will be briefly introduced. Here, the drawings, which are incorporated in and constitute a part of this specification, illustrate examples consistent with the present disclosure and, together with the description, serve to explain the technical solutions of the disclosure. It should be understood that the drawings show only some embodiments of the present disclosure, and therefore should not be regarded as limiting the scope. For those of ordinary skill in the art, without creative work, other related drawings can be obtained based on these drawings.
FIG. 1 is a schematic flowchart illustrating a makeup look processing method according to an embodiment of the present disclosure.
FIG. 2 is an illustrative interface for displaying mark information in a makeup look processing method according to an embodiment of the present disclosure.
FIG. 3 is an illustrative interface for comparing makeup looks in a makeup look processing method according to an embodiment of the present disclosure.
FIG. 4 shows an illustrative interface for display a makeup look completed in a makeup look processing method according to an embodiment of the present disclosure.
FIG. 5 is a schematic flowchart of displaying a collected face image in a makeup look processing method according to an embodiment of the present disclosure.
FIG. 6 shows an illustrative interface for displaying makeup look details in a makeup look processing method according to an embodiment of the present disclosure.
FIG. 7 shows a schematic flowchart of obtaining makeup look description information of a preset makeup look type in a makeup look processing method according to an embodiment of the present disclosure.
FIG. 8 shows an illustrative interface for displaying a try on making-up in a makeup look processing method according to an embodiment of the present disclosure.
FIG. 9 shows a schematic flowchart of obtaining makeup look description information of a preset makeup look type in a makeup look processing method according to an embodiment of the present disclosure.
FIG. 10 is a schematic flowchart illustrating a process of a try on making-up in a makeup look processing method according to an embodiment of the present disclosure.
FIG. 11 shows an illustrative interface for displaying a try on making-up in a makeup look processing method according to an embodiment of the present disclosure.
FIG. 12 shows an illustrative configuration of a makeup look processing apparatus according to an embodiment of the present disclosure.
FIG. 13 shows an illustrative structure of an electronic device according to an embodiment of the present disclosure.

### DETAILED DESCRIPTION OF THE EMBODIMENTS

In order to make the obj ectives, technical solutions and advantages of the embodiments of the present disclosure clearer, the technical solutions in the embodiments of the present disclosure will be clearly and completely described with reference to the drawings therein. Obviously, the described embodiments are only some, rather than all of the embodiments of the present disclosure. Components in the embodiments of the present disclosure generally described and illustrated in the drawings herein may be arranged and designed in different configurations. Therefore, the detailed description of the embodiments of the present disclosure provided below with reference to the drawings is not intended to limit the protection scope of the present disclosure, but represents only the preferred embodiments of the present disclosure. Based on the embodiments of the present disclosure, all other embodiments obtained by those skilled in the art without creative work shall fall within the protection scope of the present disclosure.

At present, making-up has become a part of users' daily life. A making-up process of a user includes processing of a plurality of makeup looks. By processing the plurality of makeup looks, rendering, drawing, and finishing are completed on a face, so that the purpose of beautifying the visual experience is achieved. For example, the plurality of makeup looks may include a base makeup, an eyebrow makeup, an eye makeup, a lip makeup, and the like.

In the field of making-up teaching, pictures, texts, videos or other teaching forms can be used to explain making-up steps so as to guide and teach making-up learners. There are barriers to understand and learn in these teaching forms, which makes it impossible to intuitively practice the actual operation of making-up. At the same time, it is difficult for making-up beginners to understand whether these making-up manners are truly suitable for them. Therefore, an intuitive and targeted makeup look processing scheme is expected.

In view of this, according to the makeup look processing method provided in the present disclosure, users can obtain real-time effect of each making-up content, and complete the making-up process.

In order to facilitate the understanding of the embodiments of the present disclosure, a makeup look processing method disclosed in the embodiments of the present disclosure will be first introduced in detail.

The makeup look processing method according to the embodiments of the present disclosure can be applied to a terminal device that supports a display function. For example, the terminal device may be a computer, a smart phone, a tablet computer, a Personal Digital Assistant (PDA), a smart TV, etc., which is not limited in the present disclosure.

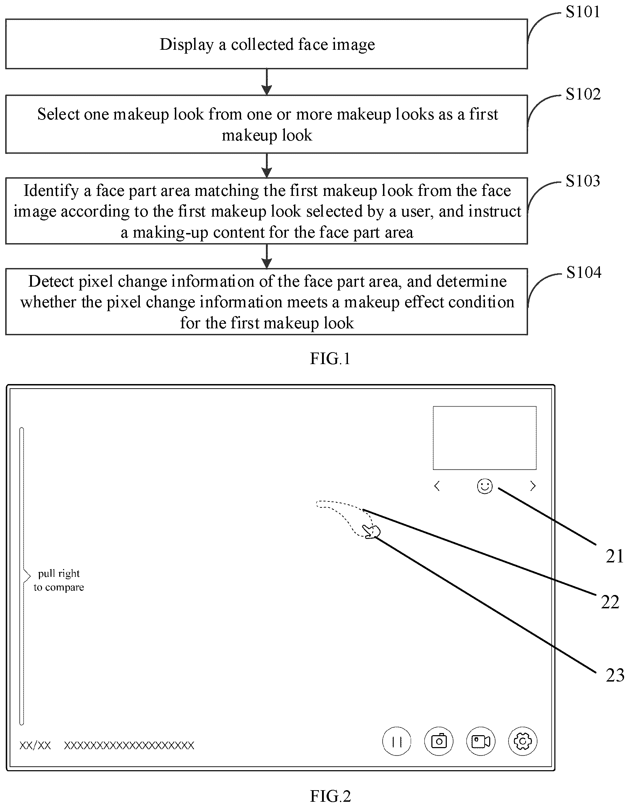

FIG. 1 is a schematic flowchart illustrating a makeup look processing method according to an embodiment of the present disclosure. The method includes the following steps:
At S101, a collected face image is displayed.
At S102, one makeup look is selected from one or more makeup looks as a first makeup look.
At S103, a face part area matching the first makeup look is identified from the face image according to the first makeup look selected by a user, and a making-up content for the face part area is instructed.
At S104, pixel change information of the face part area is detected, and it is determined whether the pixel change information meets a makeup effect condition for the first makeup look.

Based on the above steps, by identifying the face part area matching the first makeup look from the face image, and instructing the making-up content for the face part area, a user can perform makeup look processing according to the instructed making-up content. Meanwhile, by detecting the pixel change information of the face part area, and determining whether the pixel change information meets the makeup effect condition for the first makeup look, the user can determine the progress of the makeup look processing based on the detected pixel change information, which enables the makeup look processing to be intuitive.

The S101~S104 will be respectively described below.

For S101, in the embodiments of the present disclosure, a user face image can be collected through a camera module provided on a terminal device, and the collected face image can be displayed on a display module of the terminal device. The face image can be a photo, or a frame of image in a video stream, which is not limited in the present application.

For S102: in the embodiments of the present disclosure, makeup looks can include a base makeup, an eye makeup, an eyebrow makeup, a lip makeup, and the like.

For example, a user can select any makeup look as the first makeup look. For example, a user can manually select a certain makeup look on an operation interface, or the user can also select a certain makeup look through inputting a voice, which is not limited in the present application. For another example, the terminal device may recommend a certain makeup look as the first makeup look according to a making-up order, user habits, or the like.

For S103:
The face part area is an area matching the first makeup look in the face image. For example, if the first makeup look is a base makeup, the face part area can be the entire face area; if the first makeup look is an eye makeup, the face part area can be an eye area; if the first makeup look is an eyebrow makeup, the face part area can be an eyebrow area.

It can be understood that if face images collected in the step S101 are different, the same first makeup look may correspond to face part areas in the step S103 of which shapes, positions, and other features are different. In other words, the makeup look processing method according to the present disclosure can be applied to different face features of various users.

Taking an eyebrow makeup as a first makeup look for description, at least one eyebrow area can be identified from a face image, and after the eyebrow area is identified, a making-up content for the face part area (the eyebrow area) can be instructed. For example, the making-up content for the eyebrow area may include, but is not limited to, selecting a color of an eyebrow pencil; using the eyebrow pencil to outline an eyebrow; using eyebrow powder for internal filling; using a tip of the eyebrow pencil to naturally render the eyebrow; and so on.

Specifically, makeup looks in different face part areas correspond to different making-up contents, and makeup looks in the same face part area may correspond to different making-up contents due to different makeup display effects. Therefore, a making-up content can be set according to makeup look requirements.

In a possible implementation, instructing the making-up content for the face part area includes: displaying marker information for indicating a making-up range in the face part area.

In the embodiments of the present disclosure, the making-up range is an operating area corresponding to the making-up content. The making-up content may include one or more operations. For example, if the making-up content includes one operation, one making-up range can be set for the operation. For example, if the making-up content includes drawing eyeliners, the corresponding operation may include drawing the eyeliners from an inside to an outside along roots of eyelashes, and a making-up range corresponding to this operation may include an upper eyelid and a lower eyelid. When the making-up content includes a plurality of operations, the operations may correspond to the same making-up range, or different making-up ranges may be set for different operations. For example, if the making-up content includes brushing eye shadow, corresponding operations may include: at step 1, using eye shadow of color A as base at one or more eye sockets, specifically, starting to render upward slowly from roots of eyelashes for several times with a little eye shadow; at step 2, using a little eye shadow of color B to render slowly for several times at a half of eye socket(s) of an upper eyelid close to the eyelashes. Specifically, the same making-up range can be set for the step 1 and the step 2. For example, eye socket positions can be set as the making-up range in the step 1 and the step 2. Alternatively, a making-up range can be set for each of the step 1 and the step 2. For example, eye socket positions can be set as the making-up range corresponding to the step 1, and a half of eye socket(s) of the upper eyelid close to the eyelashes can be set as the making-up range corresponding to the step 2. The making-up range can be set according to actual situations.

For example, the marker information of the making-up range may include, but is not limited to, a makeup look guidance graphic and/or an action guidance graphic.

FIG. 2 is an illustrative interface for displaying marker information in a makeup look processing method. FIG. 2 includes a makeup look guidance graphic 22 (i.e., a graphic formed by a dotted line in the drawing) corresponding to an eyebrow area and an action guidance graphic 23 (i.e., a hand-shaped graphic in the drawing). The makeup look guidance graphic 22 represents that a user can perform makeup look processing in an area corresponding to the makeup look guidance graphic. The action guidance graphic 23 can move from an upper left side to a lower right corner of the makeup look guidance graphic, so that the user can complete the makeup look processing according to the action instructed by the action guidance graphic.

In the above step, by displaying the marker information of the making-up range, the user can intuitively complete one or more operations for the makeup look processing according to the making-up content and the marker information of the making-up range. The makeup look processing is clear at a glance, and thus enabling the makeup look processing to be simple and easy to operate, which can improve the efficiency of makeup look processing for users.

For S104:
In the embodiments of the present disclosure, since pixels corresponding to a face part area will change during user performing makeup look processing, pixel change information of the face part area can be detected from a face image captured in real time, and whether the processing for the first makeup look on the face part area is completed or not can be determined.

In the embodiments of the present disclosure, the user face image can be captured in real time at a certain frame rate through the camera module provided on the terminal device, and the captured face image can be displayed in real time on the display module of the terminal device. The frame rate can be set according to hardware levels of different terminal devices.

For detecting the pixel change information of the face part area, each frame of image captured in real time can be detected, or one frame of image is selected from every n frames of images in a plurality of frames of images captured in real time for detection, where n is a positive integer greater than 1.

In a possible implementation, detecting the pixel change information of the face part area, and determining whether the pixel change information meets the makeup effect condition for the first makeup look includes: detecting pixel change information of a first image area within the making-up range, and determining whether the pixel change information meets the makeup effect condition.

In the embodiments of the present disclosure, the first image area within the making-up range may be a face part area corresponding to the first makeup look, or a partial area selected from the face part area corresponding to the first makeup look. When it is detected that the pixel change information of the first image area within the making-up range meets the makeup effect condition, it is considered that the first makeup look is completed. When it is detected that the pixel change information of the first image area within the making-up range does not meet the makeup effect condition, it is considered that the first makeup look is not completed. For example, the makeup effect condition can be that a weighted average change value of a plurality of pixels in the first image area reaches a preset threshold, and then when it is determined that the weighted average change value (the weighted average change value of the plurality of pixels can be used as the pixel change information) reaches the preset threshold, it is considered that the first makeup look is completed.

In an implementation, detecting the pixel change information of the first image area within the making-up range, and determining whether the pixel change information meets the makeup effect condition includes: detecting a pixel difference value between the first image area within the making-up range and a second image area in the face image, and determining whether the pixel difference value is greater than a first preset value corresponding to the first makeup look.

In the embodiments of the present disclosure, the second image area may be any area other than the face part area corresponding to the first makeup look in the face image. For example, if the face part area matching the first makeup look is an eyebrow area, the first image area can be a partial area selected from the eyebrow area, and the second image area can be any area other than the eyebrow area in the face image, such as a face area or a forehead area.

In specific implementation, at the same moment, when it is detected that the pixel difference value between the first image area within the making-up range and the second image area is greater than the first preset value for the first makeup look, it is considered that the first makeup look is completed. The first preset value can be determined according to makeup effect of the first makeup look. The pixel difference value may be a difference value between an average value of a plurality of pixels in the first image area and an average value of a plurality of pixels in the second image area.

In the above implementation, since pixel values of a face part area subjected to first makeup look processing in the face image are different from that of a second image area not subjected to the first makeup look processing in the face image, the makeup effect of the first makeup look determined based on the detected pixel difference value between different areas in the face image at the same moment is comparative and intuitive.

In another implementation, the face image indicates a plurality of frames of face images collected within a period of time. Detecting the pixel change information of the first image area within the making-up range, and determining whether the pixel change information meets the makeup effect condition includes: determining a pixel difference value between a first image area in a current frame of face image and a first image area in other frame of face image preceding the current frame, and determining whether the pixel difference value is greater than a second preset value corresponding to the first makeup look.

In the embodiments of the present disclosure, other frame of face image preceding the current frame may be a frame of face image before the first makeup look is processed (i.e., a first frame of face image in a plurality of frames of face images), or any frame with a preset time interval from the current frame. The preset time interval can be determined according to time needed for processing the first makeup look. For example, a frame of face image collected 1 minute before the current frame, or a frame of face image collected 2 minutes before the current frame and the like. The second preset value may be determined according to the makeup effect of the first makeup look and pixel values corresponding to the other selected frame of face image.

In the above implementation, since pixel values corresponding to the first image area at different moments in face images are different during the processing for the first makeup look, the makeup effect of the first makeup look determined based on the detected pixel difference value between the same area in the face images at different moments has higher accuracy.

In a possible implementation, after determining that the pixel change information meets the makeup effect condition for the first makeup look, the method further includes: selecting another makeup look from a plurality of makeup looks as a second makeup look; identifying a new face part area matching the second makeup look from the face image, and instructing a making-up content for the new face part area; detecting pixel change information of the new face part area, and determining whether the pixel change information meets a makeup effect condition for the second makeup look.

In the embodiments of the present disclosure, when the pixel change information meets the makeup effect condition for the first makeup look, it is considered that the processing for the first makeup look is completed, and then a making-up content can be instructed for a face part area corresponding to the second makeup look in the collected face image. The second makeup look may be a makeup look other than the first makeup look in a making-up process. For example, if the making-up process includes a base makeup, an eyebrow makeup, an eye makeup, a lip makeup, and a finishing makeup, the first makeup look may be the base makeup, and the second makeup look may be the eyebrow makeup. When the first makeup look is completed, the making-up content can be instructed for a face part area corresponding to the second makeup look in the collected face image. The processing for the second makeup look is similar to the processing for the first makeup look. For specific processing, reference may be made to the processing for the first makeup look as described above, which will not be repeated in the embodiments of the present disclosure.

For example, the eye makeup can be used as a third makeup look, the lip makeup can be used as a fourth makeup look, and the finishing makeup can be used as a fifth makeup look. When the second makeup look is completed, a making-up content can be instructed first for a face part area corresponding to the third makeup look in the collected face image, and so forth until the making-up process is entirely completed, that is, until the fifth makeup look is completed. Specific making-up content included in the making-up process can be set according to actual situations.

In the above implementation, by dividing making-up steps into a plurality of makeup look processing courses, different makeup looks are processed respectively to complete the making-up process, a relative complicated making-up process can be simplified into a plurality of easier making-up processing courses, which is convenient for beginners to practice makeup look processing and reduces practice difficulties.

In a possible implementation, after determining that the pixel change information meets the makeup effect condition for the first makeup look, the method further includes: displaying prompt information for indicating that makeup processing on the face part area is completed.

In the embodiments of the present disclosure, the prompt information may be one or more of graphics, texts, voices, images and other information. For example, the prompt information may be a pleasurable image, or the prompt information may be "the makeup look is completed, and please proceed to a next step" or the like. Specifically, forms and content of the prompt information can be set according to actual needs.

In the above implementation, by displaying the prompt information, a user is prompted that a makeup look is completed, so that the user can proceed to the next step, which reduces time wasted by the user due to continue processing the first makeup look without learning the completion information of the first makeup look in time.

In a possible implementation, displaying the prompt information for indicating that the makeup processing on the face part area is completed includes: switching a display state of makeup processing progress from a first state to a second state.

In the embodiments of the present disclosure, the first state may be a state corresponding to the first makeup look, and the second state may be a state where the first makeup look is completed, or a state corresponding to the second makeup look. For example, when the display state changes from the first state to the second state, display content corresponding to the first state can be directly switched to display content corresponding to the second state on a display interface. For example, the display content corresponding to the first state may be the making-up content corresponding to the first makeup look, and the display content corresponding to the second state may be the making-up content corresponding to the second makeup look. Additionally or alternatively, the display state may be a graphic element, and then switching from the first state to the second state can indicate that a graphic corresponding to the first state can be converted to a graphic corresponding to the second state on the display interface. For example, as shown in FIG. 2, the graphic corresponding to the first state is a smile graphic 21, and the graphic corresponding to the second state is a laughing graphic, or a graphic in other states. Additionally or alternatively, the display state can be a text element, and then switching from the first state to the second state can indicate that text corresponding to the first state can be converted to text corresponding to the second state on the display interface. For example, the text corresponding to the first state can be "the first state is in progress", and the text corresponding to the second state can be "the second state is in progress". Forms and content of the display state can be set according to actual needs.

In the above implementation, after the makeup look processing is completed, by changing the display state, a user is prompted to proceed to a next step, which makes the display effect more flexible and improves the user experience.

In a possible implementation, the method further includes: in response to a first trigger operation, displaying a face image before makeup look processing and a face image after the makeup look processing for makeup look comparison.

In the embodiments of the present disclosure, the first trigger operation may include clicking on a makeup comparison area, or the first trigger operation may include receiving preset trigger audio data. For example, the trigger audio data may be "please start makeup look comparison". After the first trigger operation is received, the face image before the makeup look processing and the face image after the makeup look processing are displayed on the display interface for makeup look comparison.

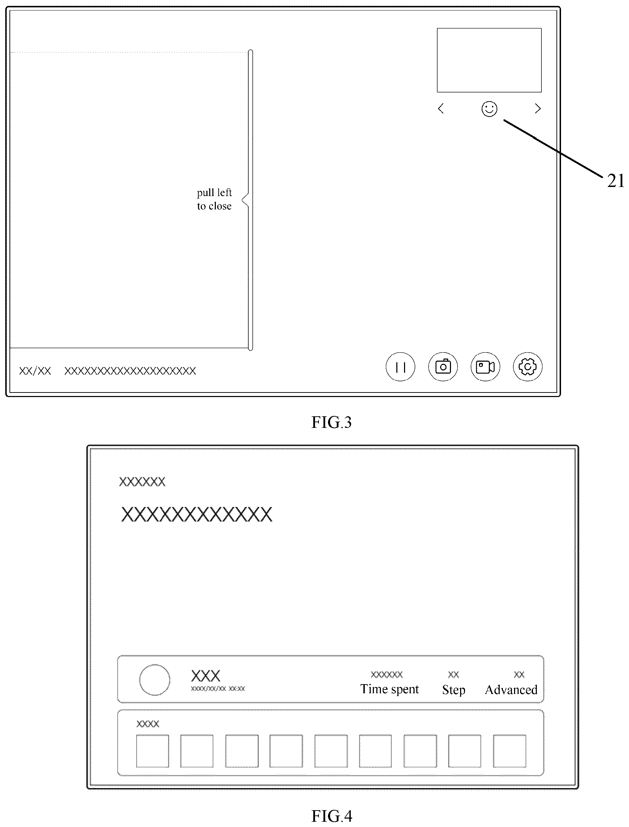

Referring to FIG. 2, an illustrative interface shown in FIG. 2 further includes an operation option of "pull right to compare" on a left side of the interface. When the triggering for the operation option of "pull right to compare" by a user is received, the interface displays the face image before the makeup look processing and a face image at current moment when the operation option of "pull right to compare" is triggered. That is, in response to the triggering for the operation option of "pull right to compare" by the user, an illustrative interface displayed is shown in FIG. 3, where a left side area in the drawing can display the face image before the makeup look processing, and a right side area in the drawing can display the face image after the makeup look processing.

Illustrative interfaces shown in FIG. 2 and FIG. 3 include an operation text displaying area located at a lower left side of the interfaces. The operation text displaying area displays operation prompt text corresponding to a to-be-processed makeup look. The illustrative interface includes a video displaying area located at an upper right side of the interface and a display state area located below the video displaying area. The video displaying area can display an operation prompt video corresponding to the to-be-processed makeup look. The display state area can display a display state of the to-be-processed makeup look, and the smile graphic 21 in the drawings is a display state of the to-be-processed makeup look corresponding to current moment. The illustrative interface further includes one or more basic function options located at a lower right side of the interface. For example, the basic function options may include: a start/pause option, a photographing option, a videoing option, and a setting option.

In the above implementation, by comparing the face image before the makeup look processing with the face image after the makeup look processing, a user can intuitively view the face images before and after the makeup look processing to determine the makeup effect.

In a possible implementation, instructing the making-up content for the face part area includes: displaying an operation prompt content of a to-be-processed makeup look, where the operation prompt content includes an operation prompt text and/or an operation prompt video.

In the embodiments of the present disclosure, the operation prompt video is video data corresponding to the to-be-processed makeup look. For example, if the to-be-processed makeup look is an eye makeup, the operation prompt video is an eye makeup video, and the operation prompt text can be eye makeup prompt text.

In the embodiments of the present disclosure, after the makeup look processing is completed, at least one of basic information of a completed makeup look, basic information of a user, time spent by the user in completing the makeup look, or a makeup look(s) corresponding to other face parts that matches the completed makeup look can be displayed on the display interface of the terminal device. The basic information of the completed makeup look may include a total number of making-up steps, a difficulty level of the makeup look, and the like. The basic information of the user may include a user avatar, a user name, a user level (which can represent the number or frequency of the user completing the makeup look), time spent by the user in completing the makeup look, and so on. If the completed makeup look is an eye makeup, the makeup look(s) corresponding to other face parts that matches the completed makeup look may be a lip makeup, and/or an eyebrow makeup.

For example, FIG. 4 shows an illustrative interface for displaying a makeup look completed in a makeup look processing method. The drawing includes a makeup look name and the number of a user completing the makeup look in an upper left area of the interface. The drawing further includes an information displaying area and a makeup look recommendation area located in a lower area of the interface. The information displaying area can be provided above or below the makeup look recommendation area. FIG. 4 shows that the information displaying area is provided above the makeup look recommendation area, and the information displaying area sequentially includes a user avatar, a user name, time when a user completes a makeup look, time spent by a user in completing a makeup look, the number of steps processed by the user for completing the makeup look, and a user level from left to right. The makeup look recommendation area includes a plurality of recommended makeup looks corresponding to other face parts that match the completed makeup look.

In the above implementation, by displaying the operation prompt text and/or the operation prompt video, a user can perform makeup look processing according to the operation prompt text and/or the operation prompt video, which is convenient for beginners to learn and/or practice the makeup look processing.

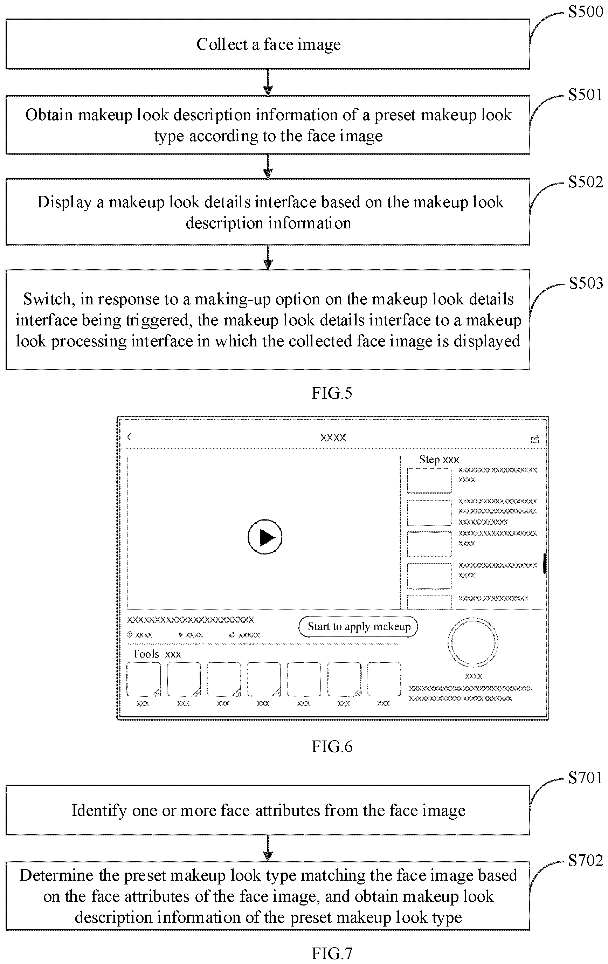

In a possible implementation, as shown in FIG. 5, displaying the collected face image includes:
At S500, a face image is collected.
At S501, makeup look description information of a preset makeup look type is obtained according to the face image.
At S502, a makeup look details interface is displayed based on the makeup look description information.
At S503, in response to a making-up option on the makeup look details interface being triggered, the makeup look details interface is switched to a makeup look processing interface in which the collected face image is displayed.

In the embodiments of the present disclosure, before the collected face image is displayed on the makeup look processing interface, the makeup look description information of the preset makeup look type is obtained. The makeup look description information may be information describing a makeup look type. The makeup look description information may be set according to the makeup look type and makeup effect corresponding to the makeup look type. For example, the makeup look description information may be a gloss enhancing makeup look with a hydrogel, a retro makeup, or the like.

In the embodiments of the present disclosure, a trigger operation for the makeup look description information can be initiated, and in response to the trigger operation for the makeup look description information, the makeup look details interface is displayed, so that a user can understand information of the preset makeup look type based on makeup look details information included in the displayed makeup look details interface. Further, when it is detected that the making-up option set on the makeup look details interface is triggered, the makeup look details interface is switched to the makeup look processing interface, and the collected face image is displayed on the makeup look processing interface.

In the embodiments of the present disclosure, after the collected face image is displayed on the makeup look processing interface, a making-up content is instructed for the displayed face image according to the makeup look processing method described in the present disclosure, so that a user can complete the makeup look processing. Specific process will not be repeated herein.

In the above implementation, by displaying the makeup look details interface of the preset makeup look type, a user can understand the preset makeup look type based on the makeup look details interface, and further the user can determine whether the preset makeup look type meets requirements, and if the preset makeup look type meets the requirements, trigger the making-up option.

In a possible implementation, the makeup look details interface includes at least one of a makeup tool introduction area or a making-up step introduction area.

**In** the embodiments of the present disclosure, the makeup tool introduction area includes tools to be used during processing of a preset makeup look. For example, if the preset makeup look is an eyebrow makeup, the makeup tool introduction area includes eyebrow pencils, eyebrow brushes, etc. The making-up step introduction area includes making-up steps included in the preset makeup look.

FIG. 6 shows an illustrative interface for displaying makeup look details in a makeup look processing method. This drawing includes a makeup look video playback area located at a upper left side of the interface, a making-up step introduction area located at an upper right side of the interface, a makeup tool introduction area located at a lower left area, and an information displaying area of a demonstration user, which is included in a video played in the makeup look video playback area, located at a lower right area. Below the makeup look video playback area, there also includes basic information of a video being played or to be played. For example, the basic information of the video includes a video length, a video name, the number of likes that the video has been given, and so on. The illustrative interface may further include an operation option for starting to apply makeup, and the operation option for starting to apply makeup may be set in any area of the interface, for example, in a right side area of the basic information of the video.

In the above implementation, by setting the makeup tool introduction area and/or the making-up step introduction area on the makeup look details interface, a user can have a detailed understanding of makeup tools and making-up steps, which is convenient for the user to learn.

In a possible embodiment, referring to FIG. 7, obtaining the makeup look description information of the preset makeup look type includes:
At S701, one or more face attributes are identified from the face image.
At S702, the preset makeup look type matching the face image is determined based on the face attributes of the face image, and makeup look description information of the preset makeup look type is obtained.

For example, the face attributes may include skin capabilities. The skin capabilities include at least one of blood circulation, glycation resistance, actinic resistance, skin moisture retention, sunburn resistance, or acne resistance. The face attributes may further include facial features analysis. The facial features analysis may include at least one of face shape analysis, eye shape analysis, eyebrow shape analysis, nose analysis, or lip analysis. For example, face types may include a square face, a round face, an oval face, a heart-shaped face, and a triangle face; eye types may include amorous eyes, almond eyes, animated eyes, willow-leaf shaped eyes, and slanted eyes; eyebrow types may include: slightly curved eyebrows, slightly straight eyebrows, thick flat eyebrows, arched eyebrows, and raised eyebrows; nose types may include: a narrow nose, a wide nose, an upturned nose, a bulbous nose, and a prominent nose; lip types may include: standard lips, thin lips, thick lips, small lips, and big lips. Additionally and alternatively, the face attributes may further include skin colors, and/or skin types, etc. The skin colors may include a plurality of levels, such as transparent white, partial white, natural color, partial dark, swarthiness, etc.; or, the skin colors may further include a plurality of scores, for example, if a skin color is transparent white, a score corresponding to the skin color can be 10 points; if a skin color is natural, a score corresponding to the skin color can be 5 points; if the skin color is swarthy, a score corresponding to the skin color can be 1 point. The skin types may include: oily skin, dry skin, and mixed skin.

For example, the collected face image can be input into a trained first neural network model to determine skin capabilities corresponding to the face image. A corresponding neural network model, for example, a face shape classification model, a nose shape classification model, an eye shape classification model, an eyebrow shape classification model, or a lip shape classification model, can be trained for each face attribute. The collected face image is input into the trained face shape classification model to determine a face shape corresponding to the face image. The collected face image is input into the trained nose shape classification model to determine a nose shape corresponding to the face image. In the same way, an eye shape, an eyebrow shape, and a lip shape corresponding to the face image can be determined. The neural network may be a Convolutional Neural Network (CNN) or a Recurrent Neural Network (RNN) or the like.

In the embodiments of the present disclosure, after the face attributes corresponding to the face image are determined, at least one makeup look type matching the face image may be determined based on the face attributes corresponding to the face image. If there is one makeup look type matching the face image, the makeup look type matching the face image is the preset makeup look type. If there are a plurality of makeup look types matching the face image, the plurality of makeup look types are displayed based on matching degree values of respective makeup look types and the face attributes, so that a user can select one makeup look type from the plurality of makeup look types based on the matching degree values of respective makeup look types, and determine the selected makeup look type as the preset makeup look type, or the user can select a makeup look type with the greatest matching degree value from the plurality of makeup look types matching the face image as the preset makeup look type.

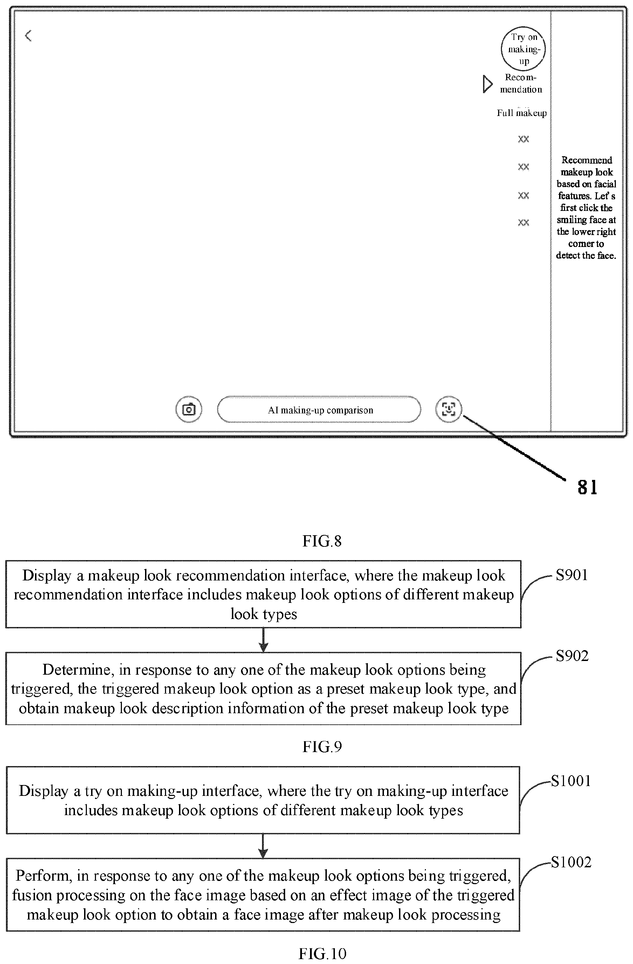

Referring to FIG. 8, which shows an illustrative interface for displaying a try on making-up, by triggering an operation option for identifying face attributes in the interface (i.e., a circular graphic 81 including a smiling face in the drawing), the face attributes of the face image can be detected.

In some embodiments, firstly, the face attributes of the face image can be detected, a corresponding preset makeup look type can be determined based on the face attributes of the face image, and makeup look description information of the preset makeup look type can be obtained. Secondly, after the makeup look description information of the preset makeup look type is obtained, the makeup look description information of the preset makeup look type can be processed according to the embodiments described in the present disclosure, so that the makeup look details interface is switched to the makeup look processing interface, and the collected face image is displayed on the makeup look processing interface. Finally, after the collected face image is displayed, the making-up content can be instructed for the displayed face image according to the embodiments described in the present disclosure, so that a user can complete the makeup look processing, and specific process will not be repeated herein.

In the above method, based on the identified face attributes, the preset makeup look type is matched for the face image, so that the preset makeup look type is consistent with the face attributes of the face image, and after a user puts on makeup based on the matched preset makeup look type, the makeup effect is better.

In a possible embodiment, referring to FIG. 9, obtaining the makeup look description information of the preset makeup look type includes:
At S901, a makeup look recommendation interface is displayed, where the makeup look recommendation interface includes makeup look options of different makeup look types.
At S902, in response to any one of the makeup look options being triggered, the triggered makeup look option is determined as a preset makeup look type, and makeup look description information of the preset makeup look type is obtained.

In the embodiments of the present disclosure, the makeup look recommendation interface includes a plurality of preset makeup look types. For example, the makeup look types may include at least one of a full makeup, a base makeup, an eye makeup, an eyebrow makeup, a lip makeup, makeup removal, or skincare. Each makeup look type includes a plurality of makeup look options. For example, the full makeup type includes: an autumn vigorous makeup with Japanese magazine style, a gloss enhancing makeup look with a hydrogel, a retro makeup, etc.

In the embodiments of the present disclosure, when it is detected that any makeup look is triggered, in response to the trigger, the triggered makeup look option is determined as the preset makeup look type. After the preset makeup look type is determined, the makeup look description information of the preset makeup look type can be processed according to the embodiments described in the present disclosure, so that the makeup look details interface is switched to the makeup look processing interface, and the collected face image is displayed in the makeup look processing interface. Finally, after the collected face image is displayed, the making-up content can be instructed for the displayed face image according to the embodiments described in the present disclosure, so that a user can complete the makeup look processing, and specific process will not be repeated herein.

In the above implementation, by recommending makeup looks to a user, the user can select one makeup look from the recommended makeup looks as the preset makeup look type according to degrees of interest, and complete the makeup look processing, which is interesting.

In a possible implementation, referring to FIG. 10, the method further includes:
At S1001, a try on making-up interface is displayed, where the try on making-up interface includes makeup look options of different makeup look types.
At S1002, in response to any one of the makeup look options being triggered, fusion processing is performed on the face image based on an effect image of the triggered makeup look option to obtain a face image after makeup look processing.

In the embodiments of the present disclosure, the makeup look types included in the try on making-up interface may include at least one of a recommended makeup, a full makeup, an eye makeup, a lip makeup, an eyebrow makeup, or a base makeup. Each makeup look type includes a plurality of makeup look options. For example, the base makeup type includes a plurality of makeup look options with different shades. When any makeup look option is triggered, an effect image of the triggered makeup look option and the face image are fused to obtain a face image after the makeup look processing. For example, a pixel feature value corresponding to the face image and a pixel feature value corresponding to the effect image of the triggered makeup look option may be weighted and summed to obtain a fused face image.

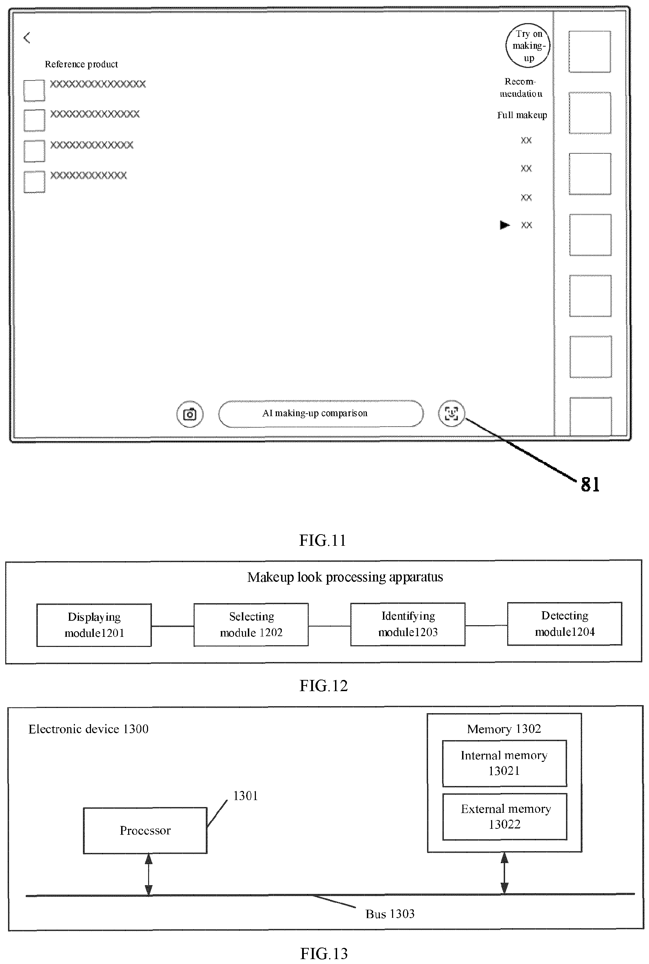

FIG. 11 shows an illustrative interface for displaying a try on making-up in a makeup look processing method. The illustrative interface may include a makeup look type displaying area (i.e., an area where makeup look types such as a recommended makeup and a full makeup are displayed in the drawing), and may further include a reference product displaying area corresponding to makeup look options; and/or, one or more effect images corresponding to the makeup look options (i.e., images displayed in square boxes on a right side in the illustrative interface); and/or, functional options, such as a photographing function option, an Artificial Intelligence (AI) making-up comparison option, and an operation option for identifying face attributes (i.e., a circular graphic 81 including a smiling face in the drawing) located at the bottom of the illustrative interface.

In the above implementation, the face image and the effect image of the triggered makeup look option can be fused to obtain the face image after the makeup look processing, so that a user can determine, based on the fused face image, whether the makeup effect of the triggered makeup look option is consistent with user needs, which can prevent the occurrence of situations where the makeup effect of the triggered makeup look option is inconsistent with the user needs, or the resulting makeup effect does not meet user aesthetics, and improve the user experience.

In a possible implementation, performing the fusion processing on the face image based on the effect image of the triggered makeup look option to obtain the face image after the makeup look processing includes: identifying a plurality of key points from the face image; dividing the face image into image areas corresponding to a plurality of face parts based on the plurality of key points; fusing the image areas corresponding to the plurality of face parts with respective effect images of the plurality of face parts in the triggered makeup look option to obtain a fused face image.

In the embodiments of the present disclosure, the face image can be divided into image areas corresponding to the plurality of face parts based on the plurality of key points. For example, the face image can be divided into an eye area, an eyebrow area, a lip area, a nose area, etc. The number of key points can be determined according to actual situations. For example, the number of key points can be 240.

In specific implementation, the image areas corresponding to the face parts can be fused with respective effect images of face parts in the triggered makeup look option. For example, an effect image corresponding to a selected shade of a base makeup can be intercepted based on a face area in the face image, so that the intercepted effect image is consistent with the face area, and the intercepted effect image is fused with the face area. An effect image of an eye in the triggered makeup look option can be intercepted based on an eye area in the face image, so that the intercepted effect image of the eye is consistent with the eye area in the face image, and the intercepted effect image of the eye is fused with the face area. Fusion processes of the lip area, the eyebrow area, and the nose area are the same as that of the eye area, and the image areas corresponding to the face parts can be fused with corresponding effect images to obtain a fused face image.

In the above implementation, the face image is divided into image areas corresponding to the plurality of face parts, and the image areas corresponding to the face parts are fused respectively with corresponding effect images. By fusing based on the divided areas, the fused image effect can be improved.

In a possible implementation, after obtaining the face image after the makeup look processing, the method further includes:
receiving a makeup look processing request corresponding to the triggered makeup look option; and using a makeup look type corresponding to the triggered makeup look option as the preset makeup look type.

In the embodiments of the present disclosure, when the face image after the makeup look processing is obtained, if the fused face image meets user needs, the makeup look processing request can be initiated for the triggered makeup look option, and the makeup look type corresponding to the triggered makeup look option can be determined as the preset makeup look type. If the fused face image does not meet the user needs, a user can return to the try on making-up interface, so that the user can reselect and trigger a makeup look option of interest.

Further, after the preset makeup look type is determined, the makeup look description information of the preset makeup look type can be processed according to the embodiments described in the present disclosure, so that the makeup look details interface is switched to the makeup look processing interface, and the collected face image is displayed on the makeup look processing interface. Finally, after the collected face image is displayed, the making-up content can be instructed for the displayed face image according to the embodiments described in the present disclosure, so that a user can complete the makeup look processing, and specific process will not be repeated herein.

In the above implementation, since the user has intuitively viewed the fused face image, if the fused face image meets the user needs, the user can directly trigger the corresponding makeup look type to perform makeup look processing, which improves the user experience.

Those skilled in the art can understand that in the above-described method according to the specific implementations, the writing order of steps does not mean a strict execution order, and does not constitute any limitation on the implementation process. The specific execution order of steps should be determined based on their functions and possible internal logic.

Based on the same concept, an embodiment of the present disclosure provides a makeup look processing apparatus. Referring to FIG. 12, which is an illustrative configuration of a makeup look processing apparatus according to an embodiment of the present disclosure, the apparatus includes a displaying module 1201, a selecting module 1202, an identifying module 1203, and a detecting module 1204. To be specific:
The displaying module 1201 is configured to display a collected face image.
The selecting module 1202 is configured to select one makeup look from one or more makeup looks as a first makeup look.
The identifying module 1203 is configured to identify a face part area matching the first makeup look from the face image, and instruct a making-up content for the face part area.
The detecting module 1204 is configured to detect, from the collected face image, pixel change information of the face part area, and determine whether the pixel change information meets a makeup effect condition for the first makeup look.

In a possible implementation, the identifying module, in a case of instructing the making-up content for the face part area, is further configured to display marker information for indicating a making-up range in the face part area.

In a possible implementation, the detecting module, in a case of detecting, from the collected face image, the pixel change information of the face part area, and determining whether the pixel change information meets the makeup effect condition for the first makeup look, is further configured to detect, from the collected face image, pixel change information of a first image area within the making-up range, and determine whether the pixel change information meets the makeup effect condition.

In a possible implementation, the detecting module, in a case of detecting, from the collected face image, the pixel change information of the face part area, and determining whether the pixel change information meets the makeup effect condition for the first makeup look, is further configured to detect, from the collected face image, a pixel difference value between the first image area within the making-up range and a second image area in the face image, and determine whether the pixel difference value is greater than a first preset value corresponding to the first makeup look.

In a possible implementation, the detecting module, in a case of detecting, from the collected face image, the pixel change information of the first image area within the making-up range, and determining whether the pixel change information meets the makeup effect condition, is further configured to determine a pixel difference value between a first image area in a current frame of face image and a first image area in other frame of face image preceding the current frame, and determine whether the pixel difference value is greater than a second preset value corresponding to the first makeup look.

In a possible implementation, the apparatus further includes: a processing module configured to select another makeup look different from the first makeup look from a plurality of makeup looks as a second makeup look; identify a new face part area matching the second makeup look from the face image, and instruct a making-up content for the new face part area; detect, from the collected face image, pixel change information of the new face part area, and determine whether the pixel change information meets a makeup effect condition for the second makeup look.

In a possible implementation, the apparatus further includes: a prompt information displaying module configured to display prompt information for indicating that makeup processing on the face part area is completed.

In a possible implementation, the prompt information displaying module, in a case of displaying the prompt information for indicating that the makeup processing on the face part area is completed, is further configured to switch a display state of makeup processing progress from a first state to a second state.

In a possible implementation, the apparatus further includes: a comparison displaying module configured to, in response to a first trigger operation, display a face image before makeup look processing and a face image after the makeup look processing for makeup look comparison.

In a possible implementation, the identifying module, in a case of instructing the making-up content for the face part area, is further configured to display an operation prompt content of a to-be-processed makeup look, where the operation prompt content includes an operation prompt text and/or an operation prompt video.

In a possible implementation, the displaying module, in a case of displaying the collected face image, is further configured to collect the face image; obtain makeup look description information of a preset makeup look type; display a makeup look details interface based on the makeup look description information; in response to a making-up option on the makeup look details interface being triggered, switch the makeup look details interface to a makeup look processing interface in which the collected face image is displayed.

In a possible implementation, the makeup look details interface includes at least one of a makeup tool introduction area or a making-up step introduction area.

In a possible implementation, the displaying module, in a case of obtaining the makeup look description information of the preset makeup look type, is further configured to identify one or more face attributes from the face image; determine a preset makeup look type matching the face image based on the face attributes of the face image, and obtain makeup look description information of the preset makeup look type.

In a possible implementation, the displaying module, in a case of obtaining the makeup look description information of the preset makeup look type, is further configured to display a makeup look recommendation interface, where the makeup look recommendation interface includes makeup look options of different makeup look types; in response to any one of the makeup look options being triggered, determine the triggered makeup look option as a preset makeup look type, and obtain makeup look description information of the preset makeup look type.

In a possible implementation, the apparatus further includes: a try on making-up interface displaying module configured to display a try on making-up interface, where the try on making-up interface includes makeup look options of different makeup look types; and a fusing module configured to, in response to any one of the makeup look options being triggered, perform fusion processing on the face image based on an effect image of the triggered makeup look option to obtain a face image after makeup look processing.

In a possible implementation, the fusing module, in a case of performing the fusion processing on the face image based on the effect image of the triggered makeup look option to obtain the face image after the makeup look processing, is further configured to identify a plurality of key points from the face image; divide the face image into image areas corresponding to a plurality of face parts based on the plurality of key points; and fuse the image areas corresponding to the plurality of face parts with respective effect images of the plurality of face parts in the triggered makeup look option to obtain a fused face image.

In a possible implementation, the apparatus further includes a receiving module configured to receive a makeup look processing request corresponding to the triggered makeup look option; and use a makeup look type corresponding to the triggered makeup look option as a preset makeup look type.

In some embodiments, functions or modules included in the apparatus according to the embodiments of the present disclosure can be used to execute the method described in the above method embodiments. For specific implementation, reference may be made to the description of the method embodiments, which will not be repeated herein for brevity.

Based on the same technical concept, an embodiment of the present disclosure provides an electronic device. Referring to FIG. 13, which is an illustrative structure of an electronic device according to an embodiment of the present disclosure, the electronic device includes a processor 1301, a memory 1302, and a bus 1303. The memory 1302 is used to store execution instructions, and includes an internal memory 13021 and an external memory 13022. Here, the internal memory 13021 is also called internal storage, which is used to temporarily store calculation data in the processor 1301 and data exchanged with the external memory 13022 such as a hard disk. The processor 1301 exchanges data with the external memory 13022 via the internal memory 13021. When the electronic device 1300 is running, the processor 1301 and the memory 1302 communicate via the bus 1303, so that the processor 1301 executes the following instructions:
A collected face image is displayed.

A face part area matching a first makeup look in the face image is identified, and a making-up content for the face part area is instructed.

Pixel change information of the face part area is detected, until the pixel change information meets a makeup effect condition for the first makeup look.

**In** addition, an embodiment of the present disclosure provides a computer readable storage medium having a computer program stored thereon, where the computer program is executed by a processor to perform the steps in the makeup look processing method described in the method embodiments.

A computer program product according to the makeup look processing method provided by the embodiments of the present disclosure includes a computer readable storage medium storing program codes, where the program codes include instructions that can be used to perform the steps in the makeup look processing method described in the method embodiments. For details, reference may be made to the method embodiments, which will not be repeated herein.

Those skilled in the art can clearly understand that, for convenience and brevity of description, for specific working process of the above-described system and apparatus, reference may be made to corresponding process in the method embodiments, which will not be repeated herein. In several embodiments provided in the present disclosure, it should be understood that the disclosed system, apparatus and method may be implemented in other ways. The apparatus embodiments described above are only schematic. For example, the division of units is only the division of logical functions, and in actual implementation, there may be other division manners, for example, multiple units or components may be combined, or integrated into another system, or some features may be ignored, or not be implemented. In addition, the coupling or direct coupling or communication connection between displayed or discussed components may be through some interfaces, and the indirect coupling or communication connection between apparatuses or units may be electrical, mechanical or in other forms.

The units described as separate components may or may not be physically separated, and the components displayed as units may or may not be physical units, which may be located in one place or may be distributed to multiple network units. Some or all of the units may be selected according to actual needs to achieve the objectives of the present disclosure.

In addition, all functional units in the embodiments of the present disclosure may be integrated into one processing unit, or each unit may be present alone physically, or two or more units may be integrated into one unit.

The functions, if being implemented in the form of software functional units and sold or used as independent products, may be stored in a processor executable, non-volatile computer readable storage medium. Based on this understanding, the technical solutions in the present disclosure in essence or a part thereof that contributes to the prior art or all or a part of the technical solutions may be embodied in the form of a software product. The computer software product is stored in a storage medium, including several instructions for enabling a computer device, which may be a personal computer, a server, a network device or the like, to perform all or a part of the methods described in the embodiments of the present disclosure. The storage medium includes a U disk, a mobile hard disk, a Read-Only Memory (ROM), a Random Access Memory (RAM), a magnetic disk or an optical disc, and other media that can store program codes.

The above are only the specific embodiments of the present disclosure, but the protection scope of this disclosure is not limited thereto. All equivalent changes or replacements that any person skilled in the art can readily envisage within the technical scope disclosed herein shall be contained in the protection scope of the disclosure. Therefore, the protection scope of the present disclosure shall be based on the protection scope of the claims.

## Claims

1. A makeup look processing method, the method being applied to a terminal device, and comprising:
displaying a collected face image;
selecting one makeup look from one or more makeup looks as a first makeup look;
identifying a face part area matching the first makeup look from the face image, and instructing a making-up content for the face part area;
detecting, from the collected face image, pixel change information of the face part area, and
determining whether the pixel change information meets a makeup effect condition for the first makeup look.

2. The method according to claim 1, wherein instructing the making-up content for the face part area comprises:
displaying marker information for indicating a making-up range in the face part area.

3. The method according to claim 2, wherein detecting, from the collected face image, the pixel change information of the face part area, and determining whether the pixel change information meets the makeup effect condition for the first makeup look comprises:
detecting, from the collected face image, pixel change information of a first image area within the making-up range, and
determining whether the pixel change information meets the makeup effect condition.

4. The method according to claim 3, wherein detecting, from the collected face image, the pixel change information of the first image area within the making-up range, and determining whether the pixel change information meets the makeup effect condition comprises:
detecting, from the collected face image, a pixel difference value between the first image area within the making-up range and a second image area in the face image, and
determining whether the pixel difference value is greater than a first preset value corresponding to the first makeup look.

5. The method according to claim 3, wherein detecting, from the collected face image, the pixel change information of the first image area within the making-up range, and determining whether the pixel change information meets the makeup effect condition comprises:
determining a pixel difference value between a first image area in a current frame of face image and a first image area in other frame of face image preceding the current frame, and
determining whether the pixel difference value is greater than a second preset value corresponding to the first makeup look.

6. The method according to any one of claims 1 to 5, wherein after determining that the pixel change information meets the makeup effect condition for the first makeup look, the method further comprises:
selecting another makeup look different from the first makeup look from a plurality of makeup looks as a second makeup look;
identifying a new face part area matching the second makeup look from the face image, and instructing a making-up content for the new face part area;
detecting, from the collected face image, pixel change information of the new face part area, and
determining whether the pixel change information meets a makeup effect condition for the second makeup look.

7. The method according to any one of claims 1 to 5, wherein after determining that the pixel change information meets the makeup effect condition for the first makeup look, the method further comprises:
displaying prompt information for indicating that makeup processing on the face part area is completed.

8. The method according to claim 7, wherein displaying the prompt information for indicating that the makeup processing on the face part area is completed comprises:
switching a display state of makeup processing progress from a first state to a second state.

9. The method according to any one of claims 1 to 5, further comprising:
in response to a first trigger operation, displaying a face image before makeup look processing and a face image after the makeup look processing for makeup look comparison.

10. The method according to any one of claims 1 to 9, wherein instructing the making-up content for the face part area comprises:
displaying an operation prompt content of the makeup look, wherein the operation prompt content comprises at least one of operation prompt text or an operation prompt video.

11. The method according to any one of claims 1 to 10, wherein displaying the collected face image comprises:
collecting the face image;
obtaining makeup look description information of a preset makeup look type;
displaying a makeup look details interface based on the makeup look description information; and
in response to a making-up option on the makeup look details interface being triggered, switching the makeup look details interface to a makeup look processing interface in which the collected face image is displayed.

12. The method according to claim 11, wherein the makeup look details interface comprises at least one of a makeup tool introduction area or a making-up step introduction area.

13. The method according to claim 11, wherein obtaining the makeup look description information of the preset makeup look type comprises:
identifying one or more face attributes from the face image;
determining the preset makeup look type matching the face image based on the face attributes of the face image, and
obtaining the makeup look description information of the preset makeup look type.

14. The method according to claim 11, wherein obtaining the makeup look description information of the preset makeup look type comprises:
displaying a makeup look recommendation interface, wherein the makeup look recommendation interface comprises makeup look options of different makeup look types;
in response to any one of the makeup look options being triggered, determining the triggered makeup look option as a preset makeup look type, and
obtaining the makeup look description information of the preset makeup look type.

15. The method according to any one of claims 1 to 14, further comprising:
displaying a try on making-up interface, wherein the try on making-up interface comprises makeup look options of different makeup look types; and
in response to any one of the makeup look options being triggered, performing fusion processing on the face image based on an effect image of the triggered makeup look option to obtain a face image after makeup look processing.

16. The method according to claim 15, wherein performing the fusion processing on the face image based on the effect image of the triggered makeup look option to obtain the face image after the makeup look processing comprises:
identifying a plurality of key points from the face image;
dividing the face image into image areas corresponding to a plurality of face parts based on the plurality of key points; and
fusing the image areas corresponding to the plurality of face parts with respective effect images of the plurality of face parts in the triggered makeup look option to obtain a fused face image.

17. The method according to claim 15, wherein after obtaining the face image after the makeup look processing, the method further comprises:
receiving a makeup look processing request corresponding to the triggered makeup look option; and
using a makeup look type corresponding to the triggered makeup look option as a preset makeup look type.

18. A makeup look processing apparatus, comprising:
a displaying module configured to display a collected face image;
a selecting module configured to select one makeup look from one or more makeup looks as a first makeup look;
an identifying module configured to identify a face part area matching the first makeup look from the face image, and instruct a making-up content for the face part area;
a detecting module configured to detect, from the collected face image, pixel change information of the face part area, and determine whether the pixel change information meets a makeup effect condition for the first makeup look.

19. An electronic device, comprising: a processor, a memory and a bus, wherein the memory stores machine readable instructions executable by the processor; when the electronic device is running, the processor communicates with the memory via the bus; and the machine readable instructions are executed by the processor to perform steps in a makeup look processing method according to any one of claims 1 to 17.

20. A computer readable storage medium having a computer program stored thereon, wherein the computer program is executed by a processor to perform steps in a makeup look processing method according to any one of claims 1 to 17.
